# EUROPEAN PATENT APPLICATION

(11) **EP 4 815 428 A1**
(43) Date of publication of application: **30.09.2026**
(21) Application number: 25194051.6
(22) Date of filing: 05.08.2025
(51) Int. Cl.: H04N 1/60

(54) **APPARATUS**

(30) Priority: 26.03.2025 JP 2025052497
(71) Applicant: FUJIFILM Business Innovation Corp., Minato-ku Tokyo (JP)
(72) Inventor: SUGATA, Tomokazu, Yokohama-shi, Kanagawa (JP); MATSUBARA, Koichi, Yokohama-shi, Kanagawa (JP); TANAKA, Shogo, Yokohama-shi, Kanagawa (JP)
(74) Representative: Becker Kurig & Partner Patentanwälte mbB

(57) **Abstract**

An apparatus includes a processor configured to cause the apparatus to print, on a recording medium, a tone patch for specification of density in printing on the recording medium and a guide mark for specification of a position of the tone patch, in which the guide mark is provided with a reference point defined by two straight lines and the guide mark is on an end portion side of the recording medium with respect to the tone patch.

## Description

### BACKGROUND OF THE INVENTION

### (i) Field of the Invention

The present invention relates to an apparatus.

### (ii) Description of Related Art

Disclosed in JP2009-071410A are a unit that forms markers, which indicate the positions of tone patches, on a sheet to be arranged in the same direction as a direction in which the tone patches are arranged and a unit that specifies the coordinates of each tone patch in the direction in which the tone patches are arranged.

Disclosed in JP2013-215962A is a configuration in which each of end portions of a control strip in a longitudinal direction is provided with at least one reference point defined by two straight lines, the position of each of patches in the control strip on a read image is specified based on the positions of the reference points, and density data of each of the patches is acquired.

### SUMMARY OF THE INVENTION

For example, there is a technique that suppresses a variation in image quality between recording mediums in a case where printing is consecutively performed on the recording mediums by an image forming apparatus. In an example of such a technique, a tone patch is printed on a recording medium on which printing is performed, the printed tone patch is read, and density correction is performed for a recording medium, on which printing is to be performed next, based on a result obtained by reading the tone patch.

Here, in a case where the position of the tone patch is changed due to a transportation failure of the recording medium or the like, there is a problem in which the tone patch fails to be read. Particularly, a probability that the tone patch fails to be read is high in a case where the size of the tone patch is small.

An object of the present invention is to suppress a problem in which a tone patch fails to be read due to a change in position of the tone patch.

According to a first aspect of the present disclosure, there is provided an apparatus including a processor configured to cause the apparatus to print, on a recording medium, a tone patch for specification of density in printing on the recording medium and a guide mark for specification of a position of the tone patch, in which the guide mark is provided with a reference point defined by two straight lines and the guide mark is on an end portion side of the recording medium with respect to the tone patch.

According to a second aspect of the present disclosure, in the apparatus according to the first aspect, the guide mark may be on an end portion side of the recording medium in a main scanning direction which is a direction orthogonal to a sub-scanning direction, the sub-scanning direction being a transportation direction of the recording medium.

According to a third aspect of the present disclosure, in the apparatus according to the first aspect or the second aspect, the reference point defined by the two straight lines of the guide mark may be a point where a straight line extending in a sub-scanning direction and a straight line extending in a main scanning direction intersect each other.

According to a fourth aspect of the present disclosure, in the apparatus according to any one of the first to third aspects, the reference point defined by the two straight lines of the guide mark may be a point composed of an end portion of a straight line extending in a sub-scanning direction and an end portion of a straight line extending in a main scanning direction.

According to a fifth aspect of the present disclosure, in the apparatus according to any one of the first to fourth aspects, the tone patch may be configured in a rectangular shape, and the reference point defined by the two straight lines of the guide mark may be configured at an end portion in a main scanning direction extending from a corner of the rectangular shape.

According to a sixth aspect of the present disclosure, in the apparatus according to the first aspect, the two straight lines may be configured such that one of the two straight lines that extends in a main scanning direction is short.

According to a seventh aspect of the present disclosure, in the apparatus according to the sixth aspect, the one of the two straight lines that extends in the main scanning direction may be on a tip end side in a sub-scanning direction.

According to an eighth aspect of the present disclosure, in the apparatus according to any one of the first to seventh aspects, a detection mark for specification of the position of the tone patch may also be printed on the recording medium.

According to a ninth aspect of the present disclosure, in the apparatus according to the eighth aspect, the detection mark may be closer to an end portion side of a paper sheet and a tip end side in a sub-scanning direction than the reference point defined by the two straight lines is.

According to a tenth aspect of the present disclosure, in the apparatus according to the first aspect, the tone patch may have a length of 3 mm or less in a main scanning direction and a length of 3 mm or less in a sub-scanning direction.

According to the first aspect of the present disclosure, it is possible to suppress a problem in which a tone patch fails to be read due to a change in position of the tone patch.

According to the second aspect of the present disclosure, it is easy to specify a position in the main scanning direction.

According to the third aspect of the present disclosure, the stability of position detection is improved.

According to the fourth aspect of the present disclosure, the recording medium can be effectively used since the region of the guide mark is reduced.

According to the fifth aspect of the present disclosure, it is possible to limit the region of the guide mark in the main scanning direction.

According to the sixth aspect of the present disclosure, the recording medium can be effectively used in the main scanning direction since the region of the guide mark in the main scanning direction is reduced.

According to the seventh aspect of the present disclosure, the straight line extending in the main scanning direction can be efficiently searched for.

According to the eighth aspect of the present disclosure, it is possible to specify the guide mark more accurately in comparison with a case where the detection mark is not printed.

According to the ninth aspect of the present disclosure, the detection mark can be searched for first and thus the guide mark can be efficiently specified.

According to the tenth aspect of the present disclosure, it is possible to figure out the position of the tone patch where the tone patch is likely to fail to be read.

### BRIEF DESCRIPTION OF THE DRAWINGS

Exemplary embodiment(s) of the present invention will be described in detail based on the following figures, wherein:
FIG. 1 is a view showing an overall configuration of an image forming system;
FIG. 2 is a diagram showing a hardware configuration example of a control unit;
FIG. 3 is a view for description of an image forming apparatus;
FIG. 4 is a view for description of tone patches formed on a paper sheet;
FIG. 5 is a diagram for further description of individual tone patches and guide marks;
FIG. 6 shows the flow of processing until the printing of the tone patches;
FIG. 7 shows the flow until density correction performed for a paper sheet, on which printing is to be performed next, based on read information of the tone patches;
FIGS. 8A and 8B are diagrams for description of a read image of a tone patch;
FIGS. 9A to 9C are diagrams showing modification examples of a guide mark; and
FIG. 10 is a diagram for description of a printing assurance width.

### DETAILED DESCRIPTION OF THE INVENTION

Hereinafter, an exemplary embodiment of the present disclosure will be described with reference to the accompanying drawings.

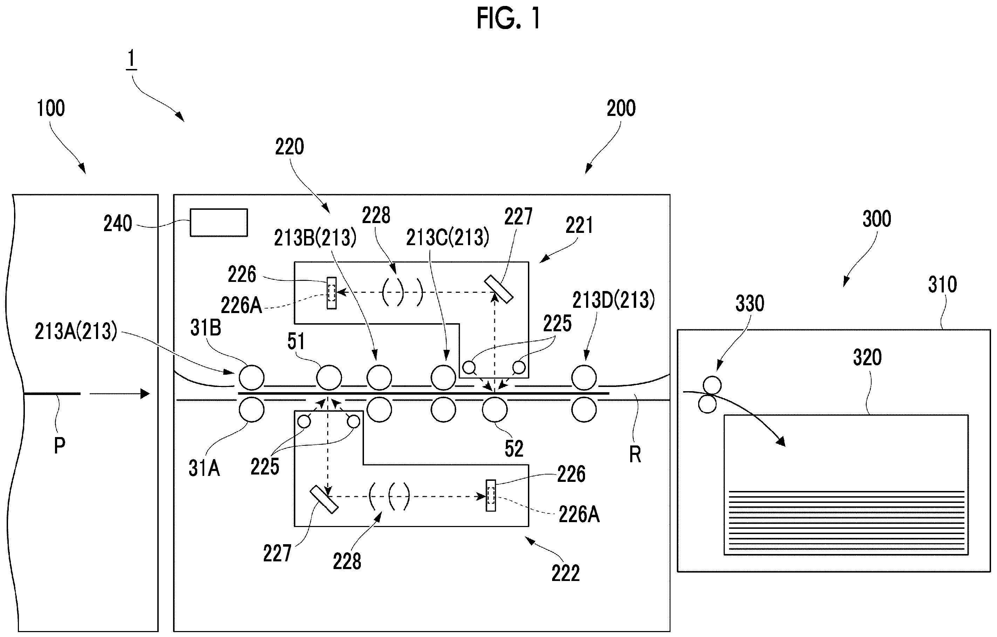

FIG. 1 is a view showing an overall configuration of an image forming system 1.

The image forming system 1 of the present exemplary embodiment is provided with an image forming apparatus 100 that forms an image on a paper sheet, an inspection apparatus 200 that inspects the image on the paper sheet that is formed by the image forming apparatus 100, and a paper sheet accommodation apparatus 300 that accommodates the paper sheet discharged from the inspection apparatus 200. The image forming apparatus 100 is an example of an apparatus.

The image forming system 1 has a function of inspecting an image formed on a paper sheet and can be regarded as an image inspection system.

In addition, the inspection apparatus 200 has a function of transporting a paper sheet, which is an example of a recording medium, and can be regarded as a paper sheet transportation apparatus. In addition, the inspection apparatus 200 has a function of reading an image formed on a paper sheet and can be regarded as an image reading apparatus.

The image forming apparatus 100 that functions as a unit for image formation acquires, from a personal computer (PC) (not shown), image data which is a source of an image to be formed.

The image forming apparatus 100 forms, based on the acquired image data, the image on a paper sheet by using a material such as toner.

Note that a mechanism for formation of the image on the paper sheet is not particularly limited. For the formation of the image on the paper sheet, for example, an electrophotographic method or an inkjet method is used.

The inspection apparatus 200 is provided with a paper sheet transportation path R through which a paper sheet discharged from the image forming apparatus 100 is transported.

In addition, the inspection apparatus 200 is provided with a plurality of transportation rolls 213, which are examples of transportation units that transport a paper sheet along the paper sheet transportation path R. In the present exemplary embodiment, a paper sheet is transported to a downstream side by the plurality of transportation rolls 213.

In the present exemplary embodiment, an upstream transportation roll 213A, which is disposed closest to an upstream side in a paper sheet transportation direction, is provided as the transportation roll 213. In addition, a downstream transportation roll 213D is provided closest to a downstream side in the paper sheet transportation direction.

Furthermore, a first intermediate transportation roll 213B and a second intermediate transportation roll 213C, which is disposed downstream of the first intermediate transportation roll 213B, are provided between the upstream transportation roll 213A and the downstream transportation roll 213D.

Each of the transportation rolls 213 is composed of a driving roll 31A that performs a rotationally driving operation and a driven roll 31B that is pressed against the driving roll 31A and that rotates with a driving force received from the driving roll 31A.

The driven roll 31B receives the driving force from the driving roll 31A at a contact portion where the driving roll 31A and the driven roll 31B come into contact with each other. The driven roll 31B rotates with the driving force received from the driving roll 31A as the driving roll 31A rotates.

In addition, the inspection apparatus 200 is provided with image reading units 220 that read an image formed on a paper sheet.

In the present exemplary embodiment, an upper image reading unit 221 and a lower image reading unit 222 which are examples of an image reader unit are provided as the image reading units 220.

The upper image reading unit 221 is disposed above the paper sheet transportation path R. The upper image reading unit 221 reads an image formed on an upper surface, which is an example of one of two surfaces of the paper sheet.

In addition, the lower image reading unit 222 is disposed below the paper sheet transportation path R. The lower image reading unit 222 reads an image formed on a lower surface, which is an example of the other of the two surfaces of the paper sheet.

Furthermore, the inspection apparatus 200 is provided with a control unit 240. The control unit 240 controls each unit provided in the inspection apparatus 200.

Each of the upper image reading unit 221 and the lower image reading unit 222 is provided with a light source 225 that irradiates a paper sheet with light, a light receiving unit 226 that receives reflected light from the paper sheet, and a light reflection member 227 that reflects the reflected light from the paper sheet and directs the reflected light to the light receiving unit 226.

The light receiving unit 226 is provided with a plurality of light receiving elements 226A composed of photodiodes or the like, and the reflected light from the paper sheet is received by the plurality of light receiving elements 226A.

The plurality of light receiving elements 226A are arranged along one direction. Specifically, the light receiving elements 226A are arranged along a direction orthogonal to the paper surface of FIG. 1.

In other words, the plurality of light receiving elements 226A are arranged along a direction orthogonal to the paper sheet transportation direction in the inspection apparatus 200 and orthogonal to a thickness direction of a paper sheet to be transported.

In addition, each of the upper image reading unit 221 and the lower image reading unit 222 is provided with an image formation optical system 228 such as a lens that causes reflected light from the light reflection member 227 to form an image on the light receiving unit 226.

In the present exemplary embodiment, each of the upper image reading unit 221 and the lower image reading unit 222 is an image reading unit including an optical reduction system.

In addition, in the present exemplary embodiment, an upper rotary body 51 that is rotatable is provided on a side opposite to a side on which the lower image reading unit 222 is installed, with the paper sheet transportation path R interposed therebetween. In addition, a lower rotary body 52 that is rotatable is provided on a side opposite to a side on which the upper image reading unit 221 is installed, with the paper sheet transportation path R interposed therebetween.

Furthermore, in the present exemplary embodiment, a driving motor (not shown) that is a driving source for rotation of the upper rotary body 51 and a driving motor (not shown) that is a driving source for rotation of the lower rotary body 52 are provided.

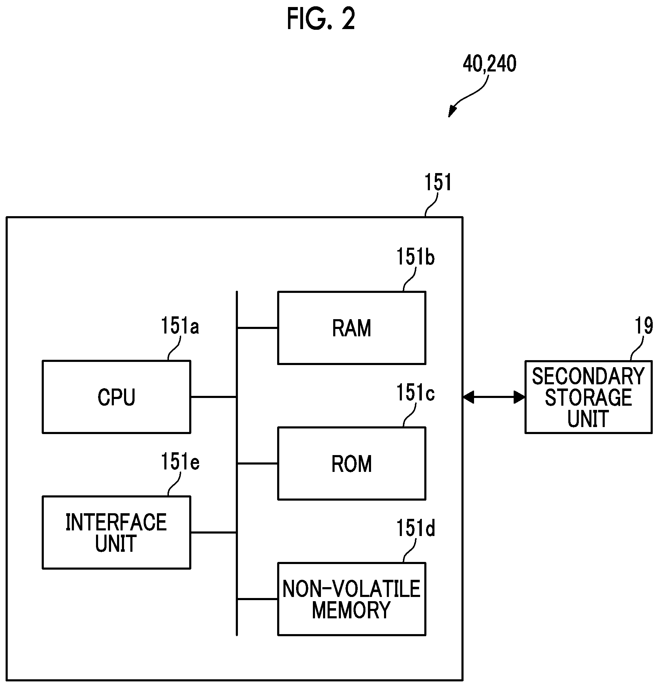

FIG. 2 is a diagram showing a hardware configuration example of a control unit 40 or the control unit 240. The control unit 40 or the control unit 240 is realized by a computer.

The control unit 40 or the control unit 240 includes an arithmetic processing unit 151 that executes digital arithmetic processing according to a program, and a secondary storage unit 19 that stores information.

The secondary storage unit 19 is realized by, for example, an existing information storage device, such as a hard disk drive (HDD), a semiconductor memory, or a magnetic tape.

The arithmetic processing unit 151 is provided with a CPU 151a which is an example of a processor.

In addition, the arithmetic processing unit 151 is provided with a RAM 151b used as a working memory or the like of the CPU 151a and a ROM 151c in which programs or the like executed by the CPU 151a are stored.

In addition, the arithmetic processing unit 151 is provided with a non-volatile memory 151d that is configured to be rewritable and can hold data even in a case where power supply is interrupted and an interface unit 151e that controls each unit, such as a communication unit, connected to the arithmetic processing unit 151.

The non-volatile memory 151d is composed of, for example, a battery-backed SRAM or a flash memory. The secondary storage unit 19 stores various types of information such as a program executed by the arithmetic processing unit 151.

In the present exemplary embodiment, the arithmetic processing unit 151 reads the program stored in the ROM 151c or the secondary storage unit 19, so that processing performed in the inspection apparatus 200 is executed.

The program to be executed by the CPU 151a may be provided to the inspection apparatus 200 in a state of being stored in a computer-readable recording medium such as a magnetic recording medium (a magnetic tape, a magnetic disk, or the like), an optical recording medium (an optical disk or the like), a magnetooptical recording medium, or a semiconductor memory. In addition, the program to be executed by the CPU 151a may be provided to the inspection apparatus 200 by using communication means such as the internet.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

The image forming system 1 will be further described with reference to FIG. 1.

The paper sheet accommodation apparatus 300 is provided with a housing 310. In addition, the paper sheet accommodation apparatus 300 is provided with a paper sheet stacking portion 320.

The paper sheet stacking portion 320 is installed in the housing 310, and in the present exemplary embodiment, paper sheets sequentially discharged from the inspection apparatus 200 are stacked in the paper sheet stacking portion 320.

Furthermore, the paper sheet accommodation apparatus 300 is provided with a feeding roller 330 that feeds a paper sheet discharged from the inspection apparatus 200 to the paper sheet stacking portion 320.

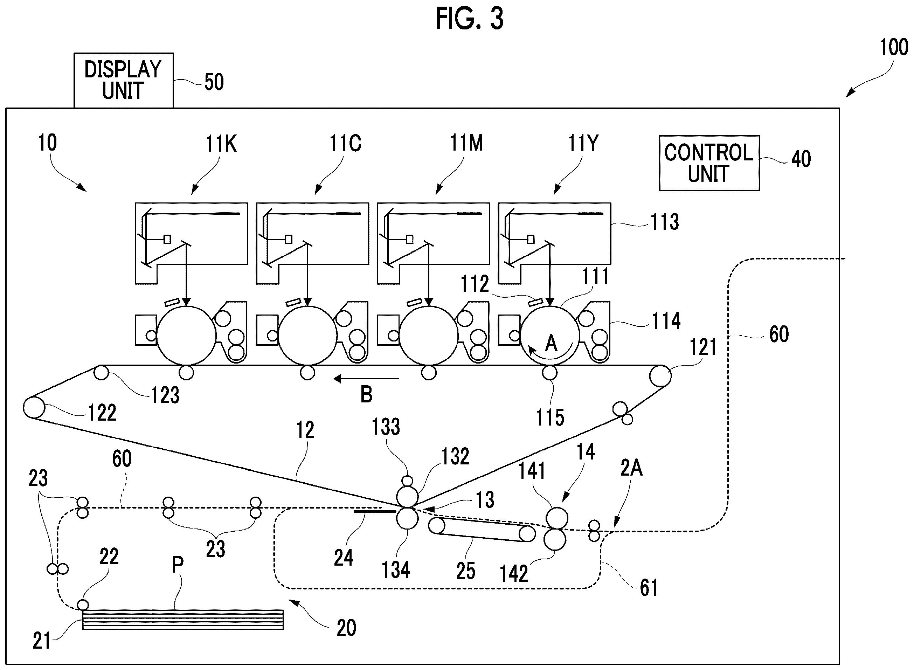

FIG. 3 is a view for description of the image forming apparatus 100.

Note that FIG. 3 shows an example of the image forming apparatus 100 and the apparatus configuration of the image forming apparatus 100 is not limited to the apparatus configuration shown in FIG. 3. The image forming apparatus 100 shown in FIG. 3 is an apparatus that forms an image by using a so-called electrophotographic method. However, the image forming apparatus 100 may also be an apparatus that forms an image by using, for example, an inkjet method.

Furthermore, the image forming apparatus 100 may also be an apparatus that forms an image by using a method other than the electrophotographic method and the inkjet method.

The image forming apparatus 100 is provided with an image formation unit 10, a paper sheet transportation unit 20, the control unit 40 that controls each unit, and a display unit 50 that receives various operations from a user.

The image formation unit 10 includes image forming units 11 (11Y, 11M, 11C, and 11K), an intermediate transfer belt 12, a secondary transfer unit 13, and a fixer 14.

In the present exemplary embodiment, four image forming units 11Y, 11M, 11C, and 11K respectively corresponding to toners of four colors which are yellow (Y), magenta (M), cyan (C), and black (K) are provided as the image forming units 11.

The four image forming units 11Y, 11M, 11C, and 11K are arranged in a movement direction of the intermediate transfer belt 12 and electrophotographically form toner images.

Each of the four image forming units 11Y, 11M, 11C, and 11K is provided with a photoconductor drum 111, a charging unit 112, an exposure unit 113, a developing unit 114, and a primary transfer unit 115.

Each of the four image forming units 11Y, 11M, 11C, and 11K forms a toner image of any color of Y, M, C, and K and transfers the formed toner image to the intermediate transfer belt 12. Accordingly, a toner image obtained by superimposing toner images of respective colors which are Y, M, C, and K onto each other is formed on the intermediate transfer belt 12.

Each photoconductor drum 111 rotates in a direction along an arrow A in the drawing at a speed determined in advance. The charging units 112 charge peripheral surfaces of the photoconductor drums 111 at a potential determined in advance. The exposure units 113 irradiate the charged peripheral surfaces of the photoconductor drums 111 with light and form electrostatic latent images on the peripheral surfaces of the photoconductor drums 111.

The developing units 114 cause toners to adhere to the electrostatic latent images formed on the peripheral surfaces of the photoconductor drums 111, so that toner images are formed. The primary transfer units 115 transfer, to the intermediate transfer belt 12, the toner images formed on the peripheral surfaces of the photoconductor drums 111.

A voltage of which the polarity is opposite to toner charging polarity is applied to the primary transfer units 115. Accordingly, the toner images formed on the peripheral surfaces of the photoconductor drums 111 are sequentially electrostatically attracted onto the intermediate transfer belt 12. As a result, color toner images superimposed to form one toner image are formed on the intermediate transfer belt 12.

The intermediate transfer belt 12 is supported by a plurality of roll-shaped members. The intermediate transfer belt 12 is a belt-shaped member that circulates and moves in a direction along an arrow B in the drawing.

In the present exemplary embodiment, as the roll-shaped members, a driving roll 121 that is driven by a motor (not shown) to drive the intermediate transfer belt 12, a tension roll 122 that applies tension to the intermediate transfer belt 12, an idle roll 123 that supports the intermediate transfer belt 12, and a backup roll 132 are provided.

The paper sheet transportation unit 20 is provided with a paper sheet accommodation portion 21 in which a plurality of paper sheets are accommodated in a stacked state and a pickup roll 22 that takes out and transports the paper sheets accommodated in the paper sheet accommodation portion 21.

In addition, the paper sheet transportation unit 20 is provided with a transportation roll 23 that transports, along a paper sheet transportation path 60, a paper sheet taken out by the pickup roll 22 and a guiding unit 24 that guides, to the secondary transfer unit 13, the paper sheet transported by the transportation roll 23.

In addition, the paper sheet transportation unit 20 is provided with a transportation belt 25 that transports a paper sheet after secondary transfer to the fixer 14.

The secondary transfer unit 13 is provided with a secondary transfer roll 134 that is disposed to be in contact with an outer surface of the intermediate transfer belt 12 and the backup roll 132 that is disposed on an inner side of the intermediate transfer belt 12 and that forms an electrode facing the secondary transfer roll 134.

In addition, in the present exemplary embodiment, a power supply roll 133 made of a metal, which applies a secondary transfer bias to the backup roll 132, is provided.

At the secondary transfer unit 13, toner images that are formed on the intermediate transfer belt 12 are transferred onto a paper sheet transported to the secondary transfer unit 13.

The fixer 14 is disposed downstream of the secondary transfer unit 13 in the paper sheet transportation direction. The fixer 14 is provided with a fixation roll 141 having a heating source (not shown) and a pressing roll 142 that is provided to face the fixation roll 141 and that presses the fixation roll 141.

In the present exemplary embodiment, a paper sheet passing through the secondary transfer unit 13 is transported to a space between the fixation roll 141 and the pressing roll 142 and unfixed toner images on the paper sheet are melted and then fixed onto the paper sheet. Accordingly, an image consisting of the toner images is formed on the paper sheet.

In addition, in the image forming apparatus 100 of the present exemplary embodiment, images are formed on both surfaces of a paper sheet and an inversion transportation path 61 used for formation of images on both surfaces of a paper sheet is provided.

The inversion transportation path 61 is provided to branch off from the paper sheet transportation path 60 at a position downstream of the fixer 14. In a case where a connection portion 2A between the inversion transportation path 61 and the paper sheet transportation path 60 is a point at which the inversion transportation path 61 starts, the inversion transportation path 61 extends leftward in the drawing and then joins the paper sheet transportation path 60 at a position upstream of the secondary transfer unit 13.

In a case where images are to be formed on both surfaces of a paper sheet, a paper sheet with an image formed on one surface thereof is once transported to a position downstream of the connection portion 2A. Thereafter, the paper sheet transportation direction is reversed and the paper sheet is fed to the inversion transportation path 61 with an end portion of the paper sheet, which is positioned at a rear end portion in the paper sheet transportation direction until the paper sheet transportation direction is reversed, serving as a leading end.

Then, the paper sheet is supplied to the secondary transfer unit 13 again via the inversion transportation path 61.

Accordingly, a toner image is transferred to the other surface of the paper sheet at the secondary transfer unit 13. Thereafter, the paper sheet is directed to the fixer 14 and the toner image is fixed to the paper sheet at the fixer 14. Through such a process, images are formed on both surfaces of a paper sheet.

Note that the way in which images are formed on both surfaces of a paper sheet is not limited thereto. For example, image formation units may be provided to respectively correspond to one surface and the other surface of a paper sheet and images may be formed on both surfaces of a paper sheet by means of the image formation units respectively provided for surfaces of a paper sheet.

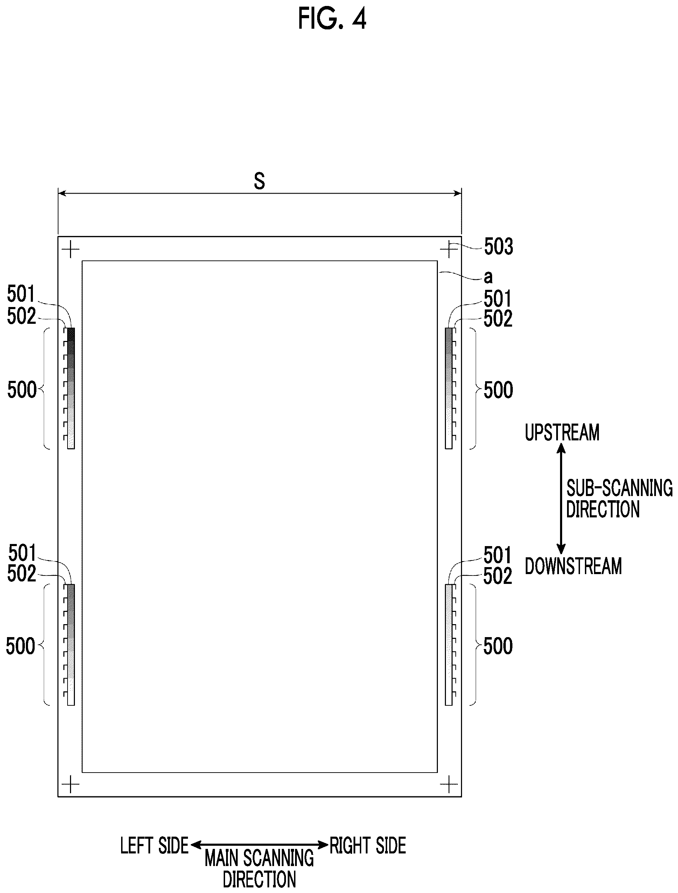

FIG. 4 is a view for description of tone patches formed on a paper sheet. A sub-scanning direction shown in FIG. 4 is a direction in which the paper sheet is transported at the paper sheet transportation unit 20. The paper sheet is transported from an upstream side in the sub-scanning direction and then is transported to a downstream side. In addition, a main scanning direction shown in FIG. 4 is a direction in which the inspection apparatus 200 reads the paper sheet and is a direction orthogonal to the sub-scanning direction. The inspection apparatus 200 may read the paper sheet starting from a left side or may read the paper sheet starting from a right side. Note that the upstream side and the downstream side in the sub-scanning direction are examples of a tip end side in the sub-scanning direction. In addition, the right side in the main scanning direction and the left side in the main scanning direction are examples of a tip end side in the main scanning direction.

In FIG. 4, a plurality of tone patches 500 for correction of the density of a predetermined color in image formation are formed. The plurality of tone patches 500 are composed of individual tone patches 501 each having the predetermined color and a predetermined density. The individual tone patches 501 are formed for correction regarding a predetermined density formed in each of the individual tone patches 501. In addition, in FIG. 4, guide marks 502 for specification of the positions of the individual tone patches 501 are shown. In addition, in FIG. 4, alignment trim marks 503 for detection of the guide marks 502 are formed. In addition, the predetermined color is a color used for image formation, and examples of the predetermined color include magenta, cyan, yellow, and black. Note that the individual tone patches 501, the guide marks 502, and the alignment trim marks 503 are formed by the image formation unit 10 of the image forming apparatus 100.

Regarding the plurality of tone patches 500, two tone patches 500 are disposed on an end portion side of the paper sheet that is on the left side in the main scanning direction. In addition, regarding the plurality of tone patches 500, two tone patches 500 are disposed on an end portion side of the paper sheet that is on the right side in the main scanning direction.

Each of the individual tone patches 501 is configured in, for example, a rectangular shape having a length of 3 mm or less in the main scanning direction and a length of 3 mm or less in the sub-scanning direction. In the main scanning direction and the sub-scanning direction, the tone patches 501 are shorter than a tone patch generally used. The individual tone patches 501 are continuously arranged in the sub-scanning direction based on the densities thereof. For example, the individual tone patches 501 are arranged in decreasing order of the density of the predetermined color, from the upstream side to the downstream side in the sub-scanning direction. Note that the individual tone patches 501 may be simply referred to as "the tone patches 501".

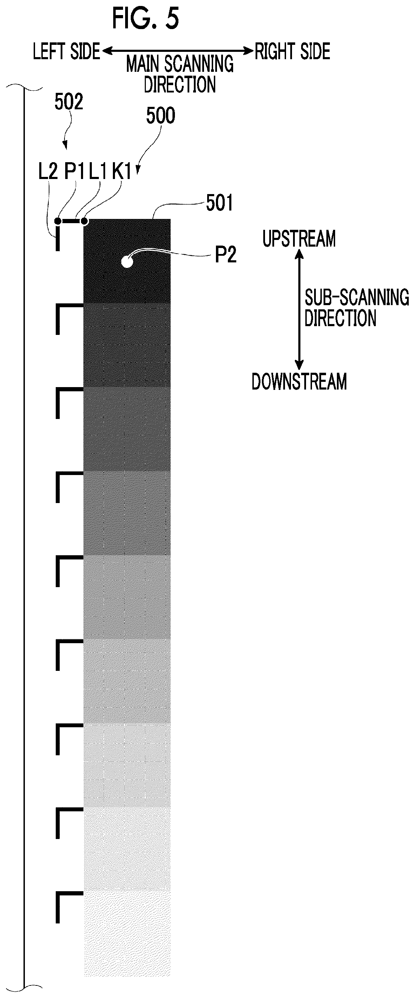

The guide mark 502 is formed for each tone patch 501. The guide mark 502 is formed at one end portion of the tone patch 501. For example, the guide mark 502 at the end portion of the paper sheet that is on the left side in the main scanning direction is formed at an end portion of the tone patch 501 that is on the left side in the main scanning direction. In addition, for example, the guide mark 502 at the end portion of the paper sheet that is on the right side in the main scanning direction is formed at an end portion of the tone patch 501 that is on the right side in the main scanning direction. The guide marks 502 will be further described with reference to FIG. 5.

The alignment trim marks 503 are disposed at four corners of the paper sheet. Specifically, one alignment trim mark 503 is disposed on the upstream side in the sub-scanning direction and on the left side in the main scanning direction. In addition, another alignment trim mark 503 is disposed on the downstream side in the sub-scanning direction and on the left side in the main scanning direction. In addition, still another alignment trim mark 503 is disposed on the upstream side in the sub-scanning direction and on the right side in the main scanning direction. In addition, still another alignment trim mark 503 is disposed on the downstream side in the sub-scanning direction and on the right side in the main scanning direction.

Each alignment trim mark 503 is used to specify the position of the guide mark 502 that is on the same side as the alignment trim mark 503. For example, the alignment trim mark 503 that is disposed on the upstream side in the sub-scanning direction and on the left side in the main scanning direction is used to specify the position of the guide mark 502 that is disposed on the upstream side in the sub-scanning direction and on the left side in the main scanning direction as with the alignment trim mark 503. Furthermore, each alignment trim mark 503 is closer to a tip end side in the sub-scanning direction than the guide mark 502 on the same side as the alignment trim mark 503 is. For example, the alignment trim mark 503 that is disposed on the upstream side in the sub-scanning direction and on the left side in the main scanning direction is closer to an upper end portion of the paper sheet and to the upstream side in the sub-scanning direction than the guide mark 502 on the same side as the alignment trim mark 503 is. In addition, a positional relationship or the like between the alignment trim mark 503 and the guide mark 502 on the same side as the alignment trim mark 503 is stored in advance in the secondary storage unit.

In addition, in FIG. 4, a paper sheet size S, which is the width of the paper sheet, is shown. The paper sheet size S is a distance from the end portion of the paper sheet that is on the left side in the main scanning direction to the end portion of the paper sheet that is on the right side in the main scanning direction. For example, in a case of a paper sheet having a size of A3 determined by the JIS standard, examples of the paper sheet size include 297 mm. In addition, examples of the paper sheet size include 330 mm as a predetermined value. The paper sheet size is stored in advance in the secondary storage unit 19.

Furthermore, in FIG. 4, a document region a, which is a predetermined inner region of the paper sheet, is shown. The document region a has a shape similar to the shape of the paper sheet. The document region a is, for example, a region that remains after the paper sheet is processed. In addition, the document region a is, for example, a region that can be designated by a customer as a region for image formation. The document region a is stored in advance in the secondary storage unit 19.

FIG. 5 is a diagram for further description of the individual tone patches 501 and the guide marks 502. FIG. 5 shows the individual tone patches 501 and the guide marks 502 that are on the left side in the main scanning direction and on the upstream side in the sub-scanning direction. In FIG. 5, the end portion of the paper sheet that is on the left side in the main scanning direction is shown. In FIG. 5, a corner K1 of the tone patch 501 is shown. In addition, in FIG. 5, a straight line L1 of the guide mark 502 that extends in the main scanning direction is shown. In addition, in FIG. 5, a straight line L2 of the guide mark 502 that extends in the sub-scanning direction is shown. In addition, a reference point P1 defined by the straight line L1 and the straight line L2 is shown. Furthermore, a center position P2, which is the individual tone patch 501, is shown. Information regarding the straight line L1, the straight line L2, the reference point P1, and the center position P2 is stored in the secondary storage unit 19 of the image forming apparatus 100 through an inputting operation performed by a manager or the like of the image forming apparatus 100.

The corner K1 is a shape formed by an end portion of one straight line of the tone patch 501 and an end portion of another straight line of the tone patch 501. In addition, the corner K1 is one of four corners of the tone patch 501 that is on the upstream side in the sub-scanning direction and on the left side in the main scanning direction.

The straight line L1 is a straight line extending toward an end portion side of the paper sheet from the corner K1. The straight line L1 is parallel to a straight line of the tone patch 501 that extends in the main scanning direction. The straight line L2 is a straight line extending toward the downstream side in the sub-scanning direction from an end portion of the straight line L1 that is on the end portion side of the paper sheet. The straight line L2 is parallel to a straight line of the tone patch 501 that extends in the sub-scanning direction. A distance allowable for the straight line L1 is smaller than a distance allowable for the straight line L2. That is, in principle, the straight line L1 is shorter than the straight line L2 so that the straight line L1 does not extend beyond an area in which image formation is possible. The straight line L1 has a length of, for example, 0.9 mm, and the straight line L2 has a length of, for example, 2 mm. In addition, a distance from an end portion of the straight line L1 that is on the left side in the main scanning direction to the end portion of the paper sheet that is on the left side in the main scanning direction is, for example, 2 mm. The distance corresponds to a region predetermined as a region in which image formation cannot be performed.

The straight line L1 and the straight line L2 constitute the guide mark 502 having an inverted L-like shape. The inverted L-like shape has the reference point P1 that is on the left side in the main scanning direction and on the upstream side in the sub-scanning direction. Therefore, it can be said that the inverted L-like shape is a shape with which the control unit 40 can easily and efficiently detect the reference point P1.

The reference point P1 is a point at which an end portion of the straight line L1 and an end portion of the straight line L2 are in contact with each other. In addition, the reference point P1 is a point for detection of the center position P2 of the tone patch 501. The reference point P1 is formed at a predetermined distance from the center position P2 of the tone patch 501 at a predetermined angle.

The center position P2 is formed at a position that is at the center of the tone patch 501 in the main scanning direction and at the center of the tone patch 501 in the sub-scanning direction. The center position P2 of the tone patch 501 is a point where the image quality of the tone patch 501 is stable in comparison with other positions. In addition, the center position P2 is a point that is less likely to be influenced by the color of the vicinity of the tone patch 501 in comparison with other positions in a case where the inspection apparatus 200 generates a read image.

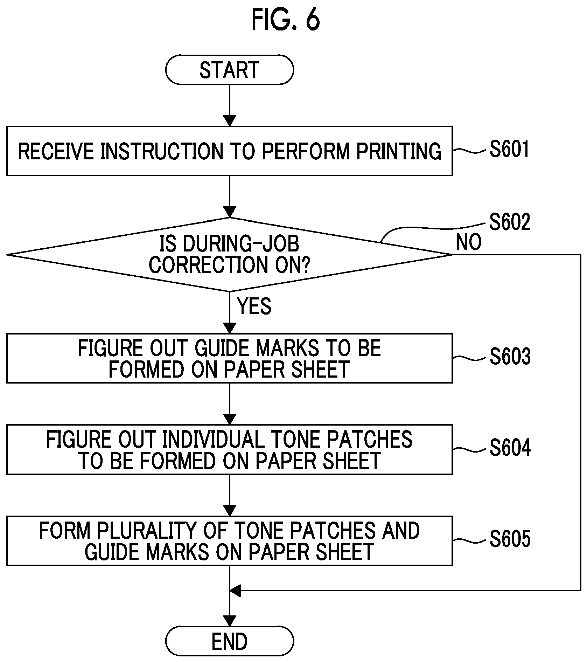

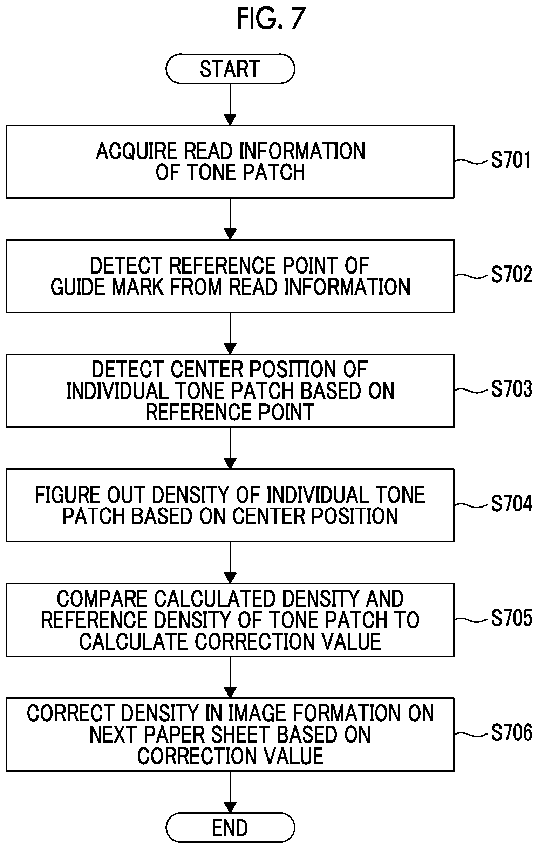

FIGS. 6 and 7 show the flow of processing in the image forming apparatus 100 in the case of during-job correction. The during-job correction is correction performed to suppress a variation in image quality between paper sheets in a case where printing is consecutively performed on the paper sheets by the image forming apparatus 100. The during-job correction is, for example, correction regarding the densities of images formed on the paper sheets. FIG. 6 shows the flow of processing until the printing of the tone patches 501. FIG. 7 shows the flow until density correction performed for a paper sheet, on which printing is to be performed next, based on read information of the tone patches 501.

First, in FIG. 6, the control unit 40 receives an instruction to perform printing on a paper sheet via the display unit 50 (step S601). Then, it is determined whether or not during-job correction of the image forming apparatus 100 is ON (step S602). In a case where the during-job correction is ON (YES in step S602), the guide marks 502 to be formed on the paper sheet are figured out (step S603). For example, the control unit 40 figures out the guide marks 502 by acquiring the guide marks 502 from the secondary storage unit 19. In a case where the during-job correction is not ON (NO in step S602), the processing is terminated.

After the guide marks are figured out in step S603, the individual tone patches 501 to be formed on the paper sheet are figured out (step S604). For example, the control unit 40 figures out the individual tone patches 501 by acquiring the individual tone patches 501 from the secondary storage unit 19. Then, the control unit 40 causes the image formation unit 10 to form a plurality of tone patches 500 and the guide marks 502 on the paper sheet (step S605).

Next, in FIG. 7, the control unit 40 acquires read information of the tone patch 501 read by the inspection apparatus 200 (step S701). Then, the reference point P1 of the guide mark 502 is detected from the read information (step S702). In this case, the control unit 40, for example, searches for information in the main scanning direction from the upstream side in the sub-scanning direction to detect the straight line L2 of the guide mark 502. Then, information in the sub-scanning direction is searched for from the left side in the main scanning direction so that the straight line L1 is detected. Then, the reference point P1 is detected based on position information of the straight line L1 and position information of the straight line L2. Note that the alignment trim mark 503 may be used for specification of the guide mark 502. In this case, the alignment trim mark 503 is detected first and the guide mark 502 is specified based on a predetermined relative positional relationship between the alignment trim mark 503 and the guide mark 502. Note that the alignment trim mark 503 is an example of a detection mark.

Then, after the reference point P1 is searched for in step S702, the center position P2 of the individual tone patch 501 is relatively detected based on the reference point P1 (step S703). For example, it is figured out that the center position P2 is at a predetermined distance from the reference point P1 at a predetermined angle.

After the center position P2 is detected, the density of the tone patch 501 is calculated based on the center position P2 (step S704). Next, the calculated density and the reference density of the tone patch 501 are compared with each other so that a correction value is calculated (step S705). The reference density is, for example, a value obtained by calculating the density of the tone patch 501 formed on the paper sheet for the first time. In addition, the reference density may be a density predetermined by a user or the like. The reference density of the tone patch 501 is stored in, for example, the secondary storage unit 19. Then, after the correction value is calculated, the density in image formation on the next paper sheet is corrected based on the correction value (step S706). For example, settings for image formation on the next paper sheet are changed to match the density of the tone patch formed on the paper sheet for the first time.

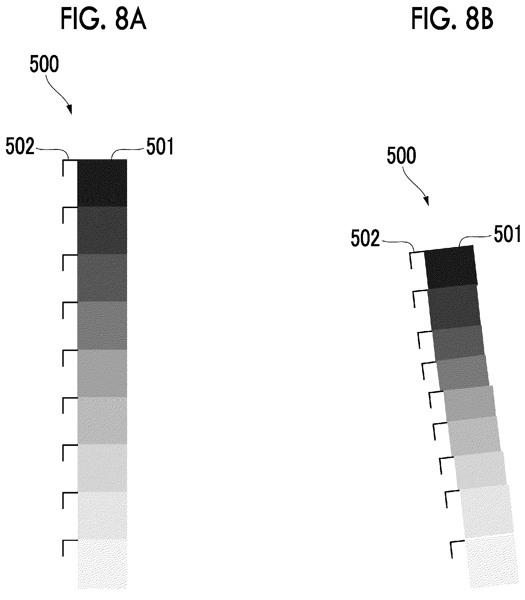

FIGS. 8A and 8B are diagrams for description of a read image of the tone patch 501. The read image is an image read by the inspection apparatus 200 and is an example of read information. FIG. 8Ais a diagram showing a read image obtained in a case where the positions of the tone patches 501 are not changed. FIG. 8B is a diagram showing a read image obtained in a case where the positions of the tone patches 501 are changed.

FIG. 8A is a read image obtained in a case where the inspection apparatus 200 reads the tone patches 501 normally. In the read image, the tone patches 501 are at positions at which the tone patches 501 are originally formed.

FIG. 8B is a read image obtained in a case where an abnormality occurs due to a transportation failure or the like at the time of transportation of a paper sheet in a case where the inspection apparatus 200 reads the tone patches 501. In the read image, the tone patches 501 are at positions different from the positions at which the tone patches 501 are originally formed. For example, the positions thereof are shifted to the upstream side or the downstream side in the sub-scanning direction, or the positions thereof are shifted to the left side or the right side in the main scanning direction. In addition, generally, even in a case where the positions of the tone patches 501 are shifted, the control unit 40 does not adjust a position at which the tone patches 501 are read. Therefore, in a case as shown in FIG. 8B, the control unit 40 of the image forming apparatus 100 may erroneously read the tone patch 501 of which the density is different from the density of the tone patch 501 to be originally read. In addition, the color of the paper sheet may be read instead of the tone patch 501 to be originally read. The possibility of such erroneous detection is increased particularly as the size of the tone patches 501 is reduced. Meanwhile, in the present exemplary embodiment, erroneous detection is suppressed and the density of the tone patch 501 to be originally read can be detected even in a case as shown in FIG. 8B since the center position P2 of the tone patch 501 is figured out based on the guide mark 502.

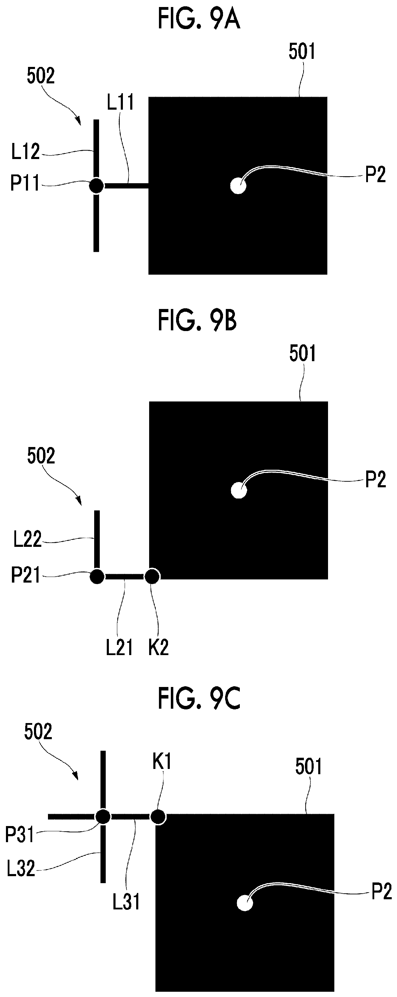

FIGS. 9A to 9C are diagrams showing modification examples of the guide mark 502. The guide mark 502 in FIG. 9A is the guide mark 502 having a T-like shape. The guide mark 502 in FIG. 9B has an L-like shape. The guide mark 502 in FIG. 9C has a cross-like shape.

In FIG. 9A, a straight line L11 extending from a straight line of the tone patch 501 that is on an end portion side of the paper sheet is shown. The straight line L11 is parallel to a straight line of the tone patch 501 that extends in the main scanning direction. In addition, a straight line L12 parallel to the sub-scanning direction of the tone patch 501 is shown. The straight line L11 is in contact with a portion of the straight line L12 that is not an end portion. Regarding the shape of the guide mark 502 in FIG. 9A, the guide mark 502 occupies a larger area in the sub-scanning direction than the shape of the guide mark 502 in FIG. 5.

In FIG. 9B, a straight line L21 is a straight line extending toward the end portion side of the paper sheet from a corner K2, and is parallel to a straight line of the tone patch 501 that extends in the main scanning direction. The corner K2 is on the downstream side in the sub-scanning direction at the tone patch 501. A straight line L22 is a straight line extending from an end portion of the straight line L21 to the upstream side in the sub-scanning direction and is parallel to a straight line of the tone patch 501 that extends in the sub-scanning direction. In addition, a reference point P21 is provided on the left side in the main scanning direction and on the downstream side in the sub-scanning direction. Regarding the shape of the guide mark 502 in FIG. 9B, the guide mark 502 is at a position at which it is difficult for the control unit 40 to search for the guide mark 502 in comparison with the shape of the guide mark 502 in FIG. 5.

In FIG. 9C, a straight line L31 is a straight line extending toward the end portion side of the paper sheet from the corner K1, and is parallel to a straight line of the tone patch 501 that extends in the main scanning direction. A straight line L32 is a straight line extending across the straight line L31 and is parallel to a straight line of the tone patch 501 that extends in the sub-scanning direction. In addition, there is a reference point P31 which is a point at which the straight line L31 and the straight line L32 intersect each other. In the case of a shape shown in FIG. 9C, the guide mark 502 occupies a larger area in the sub-scanning direction and the main scanning direction than the shape shown in FIG. 5.

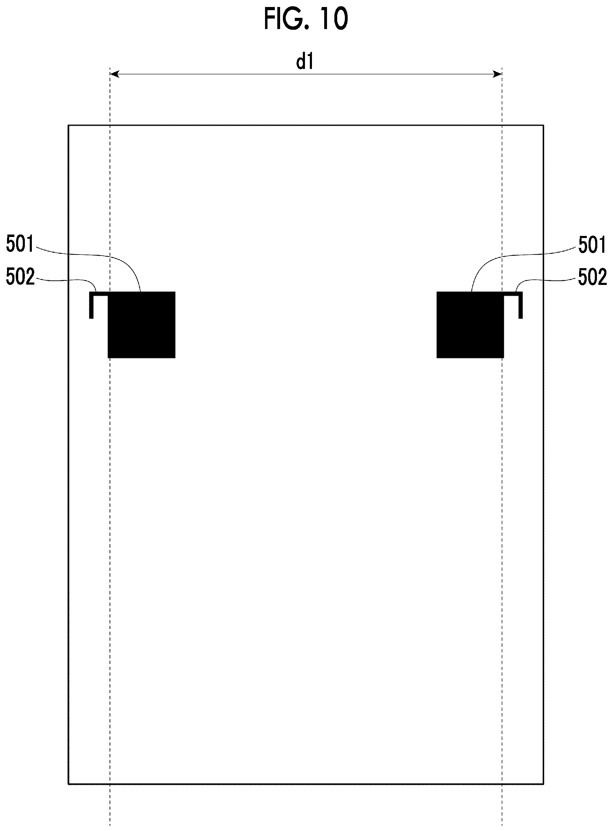

FIG. 10 is a diagram for description of a printing assurance width. In FIG. 10, the tone patches 501 are formed at an end portion of a paper sheet that is on the left side in the main scanning direction and an end portion of the paper sheet that is on the right side in the main scanning direction. In addition, in FIG. 10, the guide marks 502 are formed at the end portion of the paper sheet that is on the left side in the main scanning direction and the end portion of the paper sheet that is on the right side in the main scanning direction. In addition, in FIG. 10, shows a printing assurance width d1 which corresponds to a region in which the image forming apparatus 100 can stably perform printing on the paper sheet.

The printing assurance width d1 is a length in the main scanning direction with the center of the paper sheet as a reference. For example, the printing assurance width d1 is set to 317 mm. The printing assurance width d1 is a value set generally at the time of manufacture of the image forming apparatus, and is stored in advance in the secondary storage unit 19. In addition, the control unit 40 figures out the printing assurance width d1 by, for example, acquiring the printing assurance width d1 from the secondary storage unit 19.

In FIG. 10, the tone patches 501 are formed within the printing assurance width d1. In addition, the guide marks 502 are formed outside the printing assurance width d1. That is, in a case where the guide marks 502 are disposed on the end portion sides of the paper sheet as in the present exemplary embodiment, the printing assurance width d1 can be effectively utilized.

### <Supplementary Note>

(((1))) An apparatus comprising:
   a processor configured to:
      cause the apparatus to print, on a recording medium, a tone patch for specification of density in printing on the recording medium and a guide mark for specification of a position of the tone patch,
   wherein the guide mark is provided with a reference point defined by two straight lines, and
   the guide mark is on an end portion side of the recording medium with respect to the tone patch.
(((2))) The apparatus according to (((1))),
   wherein the guide mark is on an end portion side of the recording medium in a main scanning direction which is a direction orthogonal to a sub-scanning direction, the sub-scanning direction being a transportation direction of the recording medium.
(((3))) The apparatus according to (((1))) or (((2))),
   wherein the reference point defined by the two straight lines of the guide mark is a point where a straight line extending in a sub-scanning direction and a straight line extending in a main scanning direction intersect each other.
(((4))) The apparatus according to any one of (((1))) to (((3))),
   wherein the reference point defined by the two straight lines of the guide mark is a point composed of an end portion of a straight line extending in a sub-scanning direction and an end portion of a straight line extending in a main scanning direction.
(((5))) The apparatus according to any one of (((1))) to (((4))),
   wherein the tone patch is configured in a rectangular shape, and
   the reference point defined by the two straight lines of the guide mark is configured at an end portion in a main scanning direction extending from a corner of the rectangular shape.
(((6))) The apparatus according to (((1))),
   wherein the two straight lines are configured such that one of the two straight lines that extends in a main scanning direction is short.
(((7))) The apparatus according to (((6))),
   wherein the one of the two straight lines that extends in the main scanning direction is on a tip end side in a sub-scanning direction.
(((8))) The apparatus according to any one of (((1))) to (((7))),
   wherein a detection mark for specification of the position of the tone patch is also printed on the recording medium.
(((9))) The apparatus according to (((8))),
   wherein the detection mark is closer to an end portion side of a paper sheet and a tip end side in a sub-scanning direction than the reference point defined by the two straight lines is.
(((10))) The apparatus according to (((1))),
   wherein the tone patch has a length of 3 mm or less in a main scanning direction and a length of 3 mm or less in a sub-scanning direction.

According to the apparatus of (((1))), it is possible to suppress a problem in which a tone patch fails to be read due to a change in position of the tone patch.

According to the apparatus of (((2))), it is easy to specify a position in the main scanning direction.

According to the apparatus of (((3))), the stability of position detection is improved.

According to the apparatus of (((4))), the recording medium can be effectively used since the region of the guide mark is reduced.

According to the apparatus of (((5))), it is possible to limit the region of the guide mark in the main scanning direction.

According to the apparatus of (((6))), the recording medium can be effectively used in the main scanning direction since the region of the guide mark in the main scanning direction is reduced.

According to the apparatus of (((7))), the straight line extending in the main scanning direction can be efficiently searched for.

According to the apparatus of (((8))), it is possible to specify the guide mark more accurately in comparison with a case where the detection mark is not printed.

According to the apparatus of (((9))), the detection mark can be searched for first and thus the guide mark can be efficiently specified.

According to the apparatus of (((10))), it is possible to figure out the position of the tone patch where the tone patch is likely to fail to be read.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

100: image forming apparatus
200: inspection apparatus
10: image formation unit
20: paper sheet transportation unit
40: control unit

## Claims

1. An apparatus comprising:
a processor configured to:
cause the apparatus to print, on a recording medium, a tone patch for specification of density in printing on the recording medium and a guide mark for specification of a position of the tone patch,
wherein the guide mark is provided with a reference point defined by two straight lines, and
the guide mark is on an end portion side of the recording medium with respect to the tone patch.

2. The apparatus according to claim 1,
wherein the guide mark is on an end portion side of the recording medium in a main scanning direction which is a direction orthogonal to a sub-scanning direction, the sub-scanning direction being a transportation direction of the recording medium.

3. The apparatus according to claim 1 or 2,
wherein the reference point defined by the two straight lines of the guide mark is a point where a straight line extending in a sub-scanning direction and a straight line extending in a main scanning direction intersect each other.

4. The apparatus according to any one of claims 1 to 3,
wherein the reference point defined by the two straight lines of the guide mark is a point composed of an end portion of a straight line extending in a sub-scanning direction and an end portion of a straight line extending in a main scanning direction.

5. The apparatus according to any one of claims 1 to 4,
wherein the tone patch is configured in a rectangular shape, and
the reference point defined by the two straight lines of the guide mark is configured at an end portion in a main scanning direction extending from a corner of the rectangular shape.

6. The apparatus according to claim 1,
wherein the two straight lines are configured such that one of the two straight lines that extends in a main scanning direction is short.

7. The apparatus according to claim 6,
wherein the one of the two straight lines that extends in the main scanning direction is on a tip end side in a sub-scanning direction.

8. The apparatus according to any one of claims 1 to 7,
wherein a detection mark for specification of the position of the tone patch is also printed on the recording medium.

9. The apparatus according to claim 8,
wherein the detection mark is closer to an end portion side of a paper sheet and a tip end side in a sub-scanning direction than the reference point defined by the two straight lines is.

10. The apparatus according to claim 1,
wherein the tone patch has a length of 3 mm or less in a main scanning direction and a length of 3 mm or less in a sub-scanning direction.

## Amended claims

### Amended claims in accordance with Rule 137(2) EPC.

1. An apparatus, comprising:
a processor configured to:
cause the apparatus to print, on a recording medium, a tone patch (501) for specification of density in printing on the recording medium and a guide mark (502) for specification of a position of the tone patch (501),
wherein the guide mark (502) is provided with a reference point (P1) defined by two straight lines (L1, L2), and
the guide mark (502) is on an end portion side of the recording medium with respect to the tone patch (501),
**characterized in that**
the reference point (P1) defined by the two straight lines (L1, L2) of the guide mark (502) is a point composed of an end portion of a straight line (L1) extending in a sub-scanning direction and an end portion of a straight line (L2) extending in a main scanning direction.

2. The apparatus according to claim 1,
wherein the guide mark (502) is on an end portion side of the recording medium in the main scanning direction which is a direction orthogonal to the sub-scanning direction, the sub-scanning direction being a transportation direction of the recording medium.

3. The apparatus according to claim 1 or 2,
wherein the reference point (P1) defined by the two straight lines (L1, L2) of the guide mark (502) is a point where a straight line (L1) extending in the sub-scanning direction and a straight line (L2) extending in the main scanning direction intersect each other.

4. The apparatus according to any one of claims 1 to 3,
wherein the tone patch (501) is configured in a rectangular shape, and
the reference point (P1) defined by the two straight lines (L1, L2) of the guide mark (502) is configured at an end portion in the main scanning direction extending from a corner of the rectangular shape.

5. The apparatus according to claim 1,
wherein the two straight lines (L1, L2) are configured such that one of the two straight lines (L1, L2) that extends in the main scanning direction is short.

6. The apparatus according to claim 5,
wherein the one of the two straight lines (L1, L2) that extends in the main scanning direction is on a tip end side in the sub-scanning direction.

7. The apparatus according to any one of claims 1 to 6,
wherein a detection mark (503) for specification of the position of the tone patch (501) is also printed on the recording medium.

8. The apparatus according to claim 7,
wherein the detection mark (503) is closer to an end portion side of a paper sheet and a tip end side in the sub-scanning direction than the reference point (P1) defined by the two straight lines (L1, L2) is.

9. The apparatus according to claim 1,
wherein the tone patch (501) has a length of 3 mm or less in the main scanning direction and a length of 3 mm or less in the sub-scanning direction.
